# EUROPÄISCHE PATENTANMELDUNG

(11) **EP 1 122 267 A1**
(43) Veröffentlichungstag der Anmeldung: **08.08.2001**
(21) Anmeldenummer: 01100200.3
(22) Anmeldetag: 18.01.2001
(51) Int. Cl.: C08F 210/12, C08F 4/20

(54) **Hochmolekulare gelfreie Isobutencopolymere mit hohen Doppelbindungsgehalten**

(30) Priorität: 31.01.2000 DE 10004048
(71) Anmelder: BAYER AG, 51368 Leverkusen (DE)
(72) Erfinder: Langstein, Gerhard, Dr., 51515 Kürten (DE); Bohnenpoll, Martin, Dr., 51375 Leverkusen (DE); Commander, Ron, Dr., Sarnia, CA, N7T 7M2, (CA)

(57) **Zusammenfassung**

Gegenstand der vorliegenden Erfindung ist ein neues Verfahren zur Herstellung von gelarmen hochmolekularen Isoolefincopolymeren in Gegenwart von Vanadiumverbindungen und organischen Nitroverbindungen, insbesondere zur Herstellung von Butylkautschuken, sowie Isoolefincopolymere aufgebaut aus Isobuten, Isopren und gegebenenfalls weiteren Monomeren mit einem Comonomergehalt von mehr als 2,5 mol-%, einem Molekulargewicht M_{w} von mehr als 240 kg/mol und einem Gelgehalt von weniger als 1,2 Gew.%.

## Beschreibung

Gegenstand der vorliegenden Erfindung ist ein neues Verfahren zur Herstellung von gelarmen hochmolekularen Isoolefincopolymeren in Gegenwart von Vanadiumverbindungen und organischen Nitroverbindungen, insbesondere zur Herstellung von Butylkautschuken, sowie Isoolefincopolymere aufgebaut aus Isobuten, Isopren und gegebenenfalls weiteren Monomeren mit einem Comonomergehalt von mehr als 2,5 mol-%, einem Molekulargewicht M_{w} von mehr als 240 kg/mol und einem Gelgehalt von weniger als 1,2 Gew.%.

Das derzeit praktizierte Herstellverfahren für Butylkautschuk ist z.B. aus Ullmanns Encyclopedia of Industrial Chemistry, Vol. A 23, 1993, Seiten 288-295 bekannt. Die Durchführung der kationischen Copolymerisation von Isobuten mit Isopren im Slurryverfahren und mit Methylchlorid als Prozeßlösungsmittel erfolgt mit Aluminiumtrichlorid als Initiator unter Zusatz geringer Mengen von Wasser oder Chlorwasserstoff bei -90°C. Die tiefen Polymerisationstemperaturen sind zur Erzielung ausreichend hoher Molekulargewichte für Kautschukanwendungen notwendig.

Eine Anhebung der Reaktionstemperatur oder ein erhöhtes Isoprenangebot im Monomerfeed führen zu schlechteren Produkteigenschaften, insbesondere zu niedrigeren Molekulargewichten. Für eine effizientere Vernetzung mit anderen, hochungesättigten Dienkautschuken (BR, NR oder SBR) wäre jedoch ein höherer Grad an Unsättigung für manche Anwendungen wünschenswert.

Der molekulargewichtserniedrigende Effekt der dienischen Comonomeren kann prinzipiell durch noch tiefere Reaktionstemperaturen kompensiert werden. Dabei treten jedoch die zur Gelbindung führenden Nebenreaktionen verstärkt auf. Die Gelbildung bei Reaktionstemperaturen um -120°C und Möglichkeiten zu deren Reduktion sind beschrieben (siehe: W.A. Thaler, D.J. Buckley, Sr., Meeting of the Rubber Division, ACS, Cleveland, Ohio, May 6-9, 1975, veröffentlicht in Rubber Chemistry & Technology 49, 960-966 (1976)). Die dabei notwendigen Hilfslösungsmittel wie CS₂ sind zum einen schwer zu handhaben und müssen außerdem in relativ hohen Konzentrationen eingesetzt werden.

Bekannt ist weiterhin die gelfreie Copolymerisation von Isobuten mit verschiedenen Comonomeren zu für Kautschukanwendungen ausreichend hochmolekularen Produkten bei Temperaturen um -40°C unter Verwendung von präformiertem Vanadiumtetrachlorid (EP-A1-818 476).

Die Verwendung dieses gealterten Vanadiuminitiatorsystems bei tieferen Temperaturen und in Gegenwart von höheren als den üblichen (ca. 2 mol.-% im Feed) Isoprenkonzentrationen ist ebenfalls möglich, führt jedoch in Gegenwart von Isoprenkonzentrationen >2,5 mol.-% wie bei der AlCl₃-katalysierten Copolymerisation bei -120°C schon bei -70°C zur Gelbindung.

Eine Aufgabe der vorliegenden Erfindung war die Bereitstellung eines verbesserten Verfahrens zur Herstellung von gelarmen hochmolekularen Isoolefincopolymeren in Gegenwart von Vanadiumverbindungen insbesondere zur Herstellung von Butylkautschuken.

Eine weitere Aufgabe war die Bereitstellung eines alternativen Verfahrens zur Herstellung von gelarmen hochmolekularen Isoolefincopolymeren in Gegenwart von Vanadiumverbindungen insbesondere zur Herstellung von Butylkautschuken.

Eine weitere Aufgabe war die Bereitstellung von Isoolefincopolymeren aufgebaut aus Isobuten, Isopren und gegebenenfalls weiteren Monomeren mit einem hohen Comonomergehalt, einem ausreichenden Molekulargewicht M_{w} und einem niedrigen Gelgehalt.

Es wurde nun überraschend gefunden, dass man die Gelbildung bei tieferen Temperaturen und höheren Comonomerkonzentrationen und unter Verwendung von Vanadiumtetrachlorid als Initiator in halogenierten Lösungsmitteln unterdrücken kann, wenn man die Copolymerisation von Isoolefinen und Dienen in Gegenwart von katalytischen Mengen an organischen Nitroverbindungen durchführt.

Gegenstand der vorliegenden Erfindung ist demnach ein Verfahren zur Herstellung von gelarmen Isoolefincopolymeren in Gegenwart von Vanadiumverbindungen, dadurch gekennzeichnet, dass man in Gegenwart von organischen Nitroverbindungen polymerisiert.

Bevorzugt wird das Verfahren bei Isoolefinen mit 4 bis 16 Kohlenstoffatomen und mit den Isoolefinen copolymerisierbaren Dienen gegebenfalls in Gegenwart von weiteren mit den Monomeren copolymerisierbaren Monomeren eingesetzt. Besonders bevorzugt werden Isobuten und Isopren gegebenfalls in Gegenwart von weiteren mit diesen copolymerisierbaren Monomeren eingesetzt.

Das Verfahren wird bevorzugt in einem geeigneten Lösungsmittel, wie Chloralkanen so durchgeführt, dass die Vanadiumverbindung erst in Gegenwart des Monomeren mit der nitroorganischen Verbindung in Kontakt kommt.

Die dabei zum Einsatz kommenden organischen Nitroverbindungen sind generell bekannt und allgemein verfügbar. Die erfindungsgemäß bevorzugt verwendeten Nitroverbindungen sind durch die allgemeine Formel (I)

R-NO₂ (I)

definiert, wobei R ausgewählt wird aus der Gruppe H, C₁-C₁₈-Alkyl, C₃-C₁₈-Cycloalkyl oder C₆-C₂₄-Cycloaryl.

Unter C₁-C₁₈-Alkyl werden sämtliche dem Fachmann bekannte lineare oder verzweigte Alkylreste mit 1 bis 18 C-Atomen verstanden, wie Methyl, Ethyl, n-Propyl, i-Propyl, n-Butyl, i-Butyl, t-Butyl, n-Pentyl, i-Pentyl, neo-Pentyl, Hexyl und die weiteren Homologen, die ihrerseits wiederum substituiert sein können, wie Benzyl. Als Substituenten kommen hierbei insbesondere Alkyl oder Alkoxy, sowie Cycloalkyl oder Aryl in Frage, wie Benzoyl, Trimethylphenyl, Ethylphenyl. Bevorzugt werden Methyl, Ethyl und Benzyl.

Unter C₆-C₂₄-Aryl werden sämtliche dem Fachmann bekannte ein- oder mehrkernige Arylreste mit 6 bis 24 C-Atomen verstanden, wie Phenyl, Naphthyl, Anthracenyl, Phenanthracenyl, und Fluorenyl, die ihrerseits wiederum substituiert sein können verstanden. Als Substituenten kommen hierbei insbesondere Alkyl oder Alkoxyl, sowie Cycloalkyl oder Aryl in Frage, wie Toloyl und Methylfluorenyl. Bevorzugt wird Phenyl.

Unter C₃-C₁₈-Cycloalkyl werden sämtliche dem Fachmann bekannte ein- oder mehrkernige Cycloalkylreste mit 3 bis 18 C-Atomen verstanden, wie Cyclopropyl, Cyclobutyl, Cyclopentyl, Cyclohexyl, Cycloheptyl, Cyclooctyl und die weiteren Homologen, die ihrerseits wiederum substituiert sein können. Als Substituenten kommen hierbei insbesondere Alkyl oder Alkoxy, sowie Cycloalkyl oder Aryl in Frage, wie Benzoyl, Trimethylphenyl, Ethylphenyl. Bevorzugt werden Cyclohexyl und Cyclopentyl.

Die Konzentration der organischen Nitroverbindung im Reaktionsmedium liegt dabei bevorzugt im Bereich von 1 bis 1000 ppm, besonders bevorzugt im Bereich von 5 bis 500 ppm. Das Verhältnis Nitroverbindung zu Vanadium ist dabei bevorzugt im Bereich von 1000 : 1, besonders bevorzugt im Bereich von 100: 1 und ganz besonders bevorzugt im Bereich von 10 : 1 bis 1 : 1.

Die Polymerisation der Monomeren erfolgt in der Regel kationisch bei Temperaturen im Bereich von von -120°C bis +20°C, bevorzugt im Bereich von -90°C bis -20°C und Drücken im Bereich von 0,1 bis 4 bar.

Als Lösungs- oder Verdünnungsmittel (Reaktionsmedium) kommen hierbei die dem Fachmann bekannten inerten Lösungs- oder Verdünnungsmittel für die Butylpolymerisation in Frage. Hierbei handelt es sich um Alkane, Chloralkane, Cycloalkane oder Aromaten, die häufig auch einfach oder mehrfach mit Halogenen substituiert sind. Insbesondere seinen genannt, Hexan/Chloralkangemische, Methylchlorid, Dichlormethan oder deren Gemische. Bevorzugt werden beim erfindungsgemäßen Verfahren Chloralkane eingesetzt.

Geeignete Vanadiumverbindungen sind dem Fachmann aus EP-A1-818 476 bekannt. Bevorzugt wird Vanadiumchlorid eingesetzt. Dieses kann vorteilhaft in Form einer Lösung in einem wasser- und sauerstofffreien Alkan oder Chloralkan oder einem Gemisch der beiden mit einer Vanadiumkonzentration unterhalb von 10 Gew.% eingesetzt werden. Es kann vorteilhaft sein, die V-Lösung bei Raumtemperatur oder darunter für wenige Minuten bis zu 1000 Stunden zu lagern (altern), bevor sie eingesetzt wird. Es kann vorteilhaft sein, diese Alterung unter Lichteinwirkung durchzuführen.

Die Polymerisation kann sowohl in kontinuierlicher als auch in diskontinuierlicher Fahrweise durchgeführt werden. In kontinuierlicher Fahrweise wird das Verfahren bevorzugt mit folgenden drei Einfahrströmen durchgeführt:
I) Lösungsmittel/Verdünnungsmittel + Isoolefin (bevorzugt Isobuten)
II) Dien (bevorzugt Isopren) + organische Nitroverbindung
III) Vanadiumverbindung (bevorzugt VCl₄ in Lösungsmittel)

In einer diskontinuierlichen Fahrweise kann das Verfahren beispielsweise wie folgt durchgeführt werden:

Der auf Reaktionstemperatur vorgekühlte Reaktor wird mit dem Lösungsmittel oder Diluent, den Monomeren und der Nitroverbindung beschickt. Anschließend wird der Initiator in Form einer verdünnten Lösung so zugepumpt, dass die Polymerisationswärme problemlos abgeführt werden kann. Der Verlauf der Reaktion kann anhand der Wärmeentwicklung verfolgt werden.

Alle Operationen werden unter Schutzgas durchgeführt. Nach dem Ende der Polymerisation wird mit einem phenolischen Antioxidant, wie z.B. 2,2'-Methylen-bis(4-methyl-6-tert-butylphenol), gelöst in Ethanol abgestoppt.

Durch das erfindungsgemäße Verfahren lassen sich neue hochmolekulare Isoolefincopolymere mit hohen Doppelbindungsgehalten und gleichzeitig niedrigen Gelgehalten herstellen. Der Gehalt an Doppelbindungen wird mit Hilfe der Protonenresonanzspektroskopie bestimmt.

Aus diesem Grunde sind Isoolefincopolymere aufgebaut aus Isobuten, Isopren und gegebenfalls weiteren Monomeren mit einem Diengehalt (Comonomergehalt) von mehr als 2,5 mol-%, einem Molekulargewicht M_{w} von mehr als 240 kg/mol und einem Gelgehalt von weniger als 1,2 Gew.% ein weiterer Gegenstand der Erfindung.

Diese Polymere eignen sich vorzüglich zur Herstellung von Formkörpern aller Art, insbesondere Reifenbestandteilen, ganz besonders sog. inner linern, sowie sog. Technischen Gummiartikeln, wie Stopfen, Dämpfungselemente, Profile, Folien, Beschichtungen. Die Polymere werden hierzu rein oder im Gemisch mit anderen Kautschuken, wie NR, BR, HNBR, NBR, SBR, EPDM oder Fluorkautschuken eingesetzt.

Zur Veranschaulichung der vorliegenden Erfindung sind folgende Beispiele angeführt:

### Beispiele

### Experimentelle Einzelheiten

Die **Gelgehalte** wurden in Toluol nach einer Lösezeit von 24 Stunden bei 30°C mit einer Probenkonzentration von 12,5 g/l bestimmt. Die Abtrennung der unlöslichen Anteile erfolgte durch Ultrazentrifugation (1 Stunde bei 20 000 Umdrehungen pro Minute und 25°C).

Die **Lösungsviskosität η** der löslichen Anteile wurde in Toluol bei 30°C durch Ubbelohde-Kapillarviskosimetrie bestimmt.

Die **GPC-Untersuchungen** erfolgten durch Kombination von vier Säulen ä 30 cm Länge der Firma Polymer Laboratories (PL-Mixed A). Der Innendurchmesser der Säulen betrug 0,75 cm. Das Injektionsvolumen betrug 100 µl. Die Elution mit THF erfolgte mit 0,8 ml/min. Zur Detektion wurden ein UV-Detektor (260 nm) und ein Refraktometer verwendet. Die Auswertung erfolgte mit Hilfe der Mark-Houwink-Beziehung für Polyisobutylen (dn/dc = 0,114; α = 0,6; K = 0,05).

Die verwendeten Lösungsmittel und Monomeren wurden vor dem Beschicken des Reaktors getrocknet (Methylchlorid mit Sicapent; Isobuten mit Natrium auf Aluminiumoxid; Isopren mit Calciumhydrid). Die Nitroverbindungen wurden unter Schutzgas destilliert.

### Beispiel 1 (Vergleichsbeispiel)

300 g (5,35 mol) Isobuten wurden zusammen mit 700 g Methylchlorid und variablen Mengen Isopren bei -90 °C unter einer Argonatmosphäre und unter Lichtausschluß vorgelegt. Zu dieser Mischung wurde eine Lösung von Vanadiumtetrachlorid in Hexan (Konzentration: 0,62 g Vanadiumtetrachlorid in 25 ml n-Hexan) langsam bis zum Einsetzen der Reaktion (erkennbar an einem Temperaturanstieg der Reaktionsmischung) zugetropft (Dauer der Zudosierung etwa 15 - 20 Minuten).

Nach einer Reaktionsdauer von etwa 10 - 15 Minuten wurde die exotherme Reaktion durch Zugabe einer vorgekühlen Lösung von 1 g 2,2'-Methylen-bis(4-methyl-6-tert-butylphenol) (Vulkanox BKF der Firma Bayer AG Leverkusen) in 250 ml Ethanol abgestoppt. Das ausgefallene Polymer wurde nach dem Abdekantieren der Flüssigkeit mit 2,5 1 Ethanol gewaschen, zu einem dünnen Fell ausgewalzt und im Vakuum bei 50 °C einen Tag getrocknet.

Die Ergebnisse sind in der folgenden Tabelle 1 dargestellt:

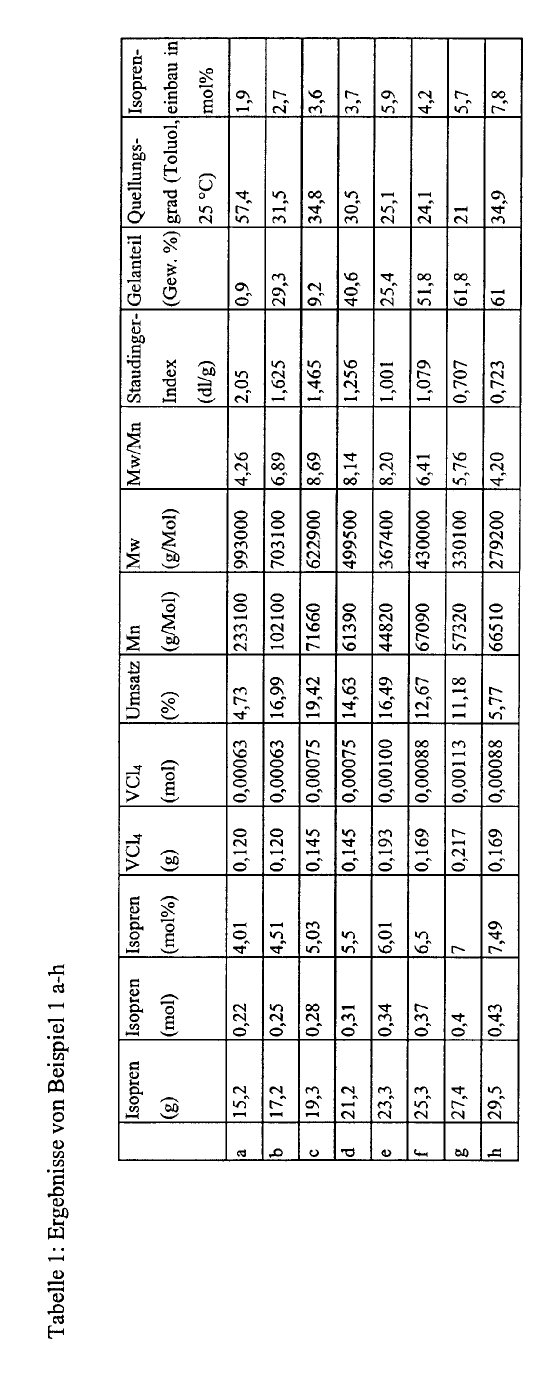

### Beispiel 2 (erfindungsgemäßes Beispiel)

Die Versuche aus Beispiel 1 wurden wiederholt, mit dem Unterschied, dass zu der Monomerlösung vor Beginn der Reaktion eine Menge von 0,61 g (9,99 mmol) Nitromethan zugesetzt wurden. Alle anderen Versuchsbedingungen blieben unverändert.

Die Ergebnisse sind in der folgenden Tabelle 2 dargestellt:

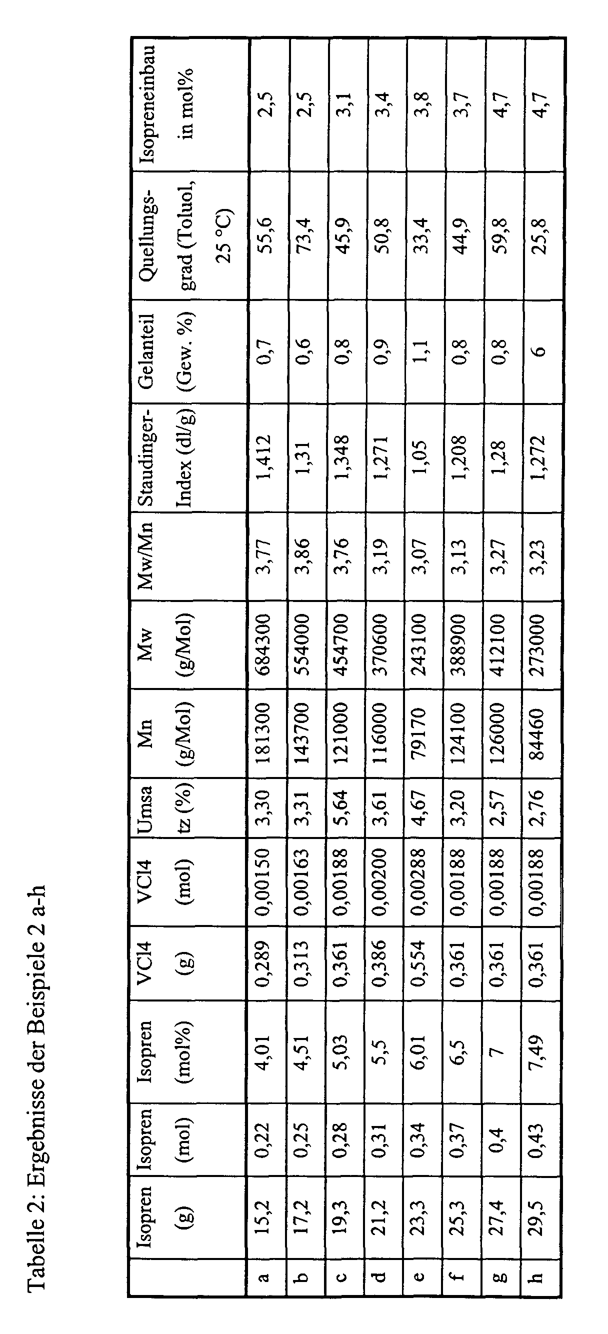

Zum besseren Vergleich werden die Ergebnisse beider Versuche in der folgenden Tabelle 3 gegenübergestellt:

| | Isopren im Feed (mol%) | Gelanteil ***ohne*** Nitromethan (Gew. %) | Gelanteil ***mit*** Nitromethan (Gew. %) |
|---|---|---|---|
| a | 4,01 | 0,9 | 0,7 |
| b | 4,51 | 29,3 | 0,6 |
| c | 5,03 | 9,2 | 0,8 |
| d | 5,5 | 40,6 | 0,9 |
| e | 6,01 | 25,4 | 1,1 |
| f | 6,5 | 51,8 | 0,8 |
| g | 7 | 61,8 | 0,8 |
| h | 7,49 | 61 | 6 |

Man erkennt deutlich den drastischen Rückgang des Gelanteils durch den Zusatz von Nitromethan.

## Patentansprüche

1. Verfahren zur Herstellung von gelarmen Isoolefincopolymeren in Gegenwart von Vanadiumverbindungen, dadurch gekennzeichnet, dass man in Gegenwart von organischen Nitroverbindungen polymerisiert.

2. Verfahren nach Anspruch 1, dadurch gekennzeichnet, dass die organische Nitroverbindung der allgemeine Formel (I)
R-NO₂ (I)
entspricht, wobei R ausgewählt wird aus der Gruppe H, C₁-C₁₈-Alkyl, C₃-C₁₈-Cycloalkyl oder C₆-C₂₄-Cycloaryl.

3. Verfahren nach Anspruch 1 und/oder 2, dadurch gekennzeichnet, dass die Konzentration der organischen Nitroverbindung im Reaktionsmedium im Bereich von 1 bis 1000 ppm liegt.

4. Verfahren nach einem oder mehreren der Ansprüche 1-3, dadurch gekennzeichnet, dass man als Vanadiumverbindung VCl₄ einsetzt.

5. Verfahren nach einem oder mehreren der Ansprüche 1-4, dadurch gekennzeichnet, dass man Isobuten mit Isopren und gegebenenfalls weiteren Monomeren copolymerisiert.

6. Isoolefincopolymere aufgebaut aus Isobuten, Isopren und gegebenenfalls weiteren Monomeren mit einem Diengehalt (Comonomergehalt) von mehr als 2,5 mol-%, einem Molekulargewicht M_{w} von mehr als 240 kg/mol und einem Gelgehalt von weniger als 1,2 Gew.%.
